# EUROPEAN PATENT SPECIFICATION

(11) **EP 3 672 876 B1**
(45) Date of publication and mention of the grant of the patent: **17.02.2021**
(21) Application number: 17857660.9
(22) Date of filing: 23.08.2017
(51) Int. Cl.: B65B 11/04, A22C 17/00, B65B 25/06, B65B 61/24, B65B 11/54, B65B 11/58

(54) **DEVICE FOR PACKAGING A MEAT PRODUCT HAVING A CYLINDRICAL SHAPE**
VORRICHTUNG ZUM VERPACKEN EINES FLEISCHPRODUKTES MIT ZYLINDRISCHER FORM
DISPOSITIF D'EMBALLAGE D'UN PRODUIT DE VIANDE DE FORME CYLINDRIQUE

(43) Date of publication of application: 01.07.2020
(73) Proprietor: Kesici, Ismail Fatih, Osmangazi/Bursa (TR)
(72) Inventor: Kesici, Ismail Fatih, Osmangazi/Bursa (TR)
(74) Representative: Sevinç, Erkan
(86) International application number: PCT/TR2017/050404
(87) International publication number: WO 2019/040010

(56) References cited:
- EP-A1- 0 509 154
- WO-A1-2017/138893
- AU-B2- 551 030

## Description

### Technical Field of the Invention

The present invention relates to a device for packaging a meat product having a cylindrical or frusto-conical shape. The meat product may comprise meat slices and/or minced meat which are stacked around a skewer and finally takes the form of a cylinder or a frusto-cone. The packaging device according to the present invention wraps the meat product with a flexible coating material which usually in the form of a polymeric strip or folio.

### Description of the Prior Art

The meat product which the present invention intends to package is a stack of meat slices or minced meat attached to a skewer. Once the preparation of the meat product is completed, it shall be wrapped with a packaging material so that contamination of the meat product is prevented. If the meat product is not wrapped with a suitable packaging material, cold air circulating inside a freezing room dries the outer surface of the meat product and results in formation of dry and rough outer shell. Furthermore, smell give-off and liquid leakage shall be prevented during storage in a freezing room. As the meat product is only semi-rigid and contains a considerable amount of liquid, known packaging system fail to provide an efficient packaging.

Known packaging methods include manually wrapping the meat product with folio material. The folio material is usually a polymeric strip material made of polypropylene or polyethylene. However, the manual wrapping process is unreliable in terms of liquid leakage from the bottom of the meat product. A known measure to prevent the leakage problem was to manually wrap the meat product a large number times and form dozens of layers of strip material. However, this measure is still inefficient while resulting not only in a huge waste of labor time but also waste of packaging material.

A known problem with manual wrapping of a strip material is that the strip material slips into the meat slices, particularly in the bottom end of the product. Once the packaging is completed and the meat product is sent to the freezing room, the strip material which slipped into the meat slices can no longer be removed. If not noticed during grilling, the folio material slipped into the meat slices is often served to the dish of a customer along with the grilled meat.

DE 3,241,107 discloses an apparatus which permits products to be grilled, that is in particular meat slices, to be pushed onto a hollow rod. This hollow rod is deep-frozen and packaged together with the products to be grilled. However, it fails to disclose an efficient packaging which prevents leakage and odor give-off.

US 3,795,086 discloses a method for wrapping meat, particularly freshly slaughtered carcass, comprises supporting the carcass upon a rotatable member adjacent a roll supply of a plastic film, engaging a portion of the film on the carcass and rotating the support for the carcass so as to cause the film to wrap around the carcass. However, this method is inefficient in packaging a meat product which is ready for grilling and which has cylindrical or frusto-conical shape. WO 2017/138893 A1 also discloses a packaging device according to preamble of claim 1.

### Summary of the Invention

A packaging device for packaging a meat product having a cylindrical or frusto-conical shape is disclosed. The packaging device has a frame extending generally in the horizontal plane and an arm holder extending perpendicularly to said frame in the vertical plane. The packaging device comprises a rotator for accommodating the meat product in an upright manner and rotating the same around its primary axis. The device has a robot arm which is rotatably attached to the arm holder and which, in use, carries a roll of a flexible coating material for wrapping on the surface of the meat product. Said packaging device further comprises a pair of locking blades which are adapted to move in the horizontal plane wherein said pair of locking blades compresses the flexible coating material at the bottom end of the meat product such that the flexible coating material is matted on the bottom surface of the meat product when said meat product is rotated around its primary axis.

The robot arm of the packaging device according to the present invention is attached to the arm holder via a rotatable bearing such that the robot arm is able to rotate around an axis which is perpendicular to the vertical plane. The robot arm may have a slot within which a rotatable bearing can slide by the actuation of an actuator so that the robot arm is able to conduct transitional movement simultaneously during rotation. The transitional movement of the robot arm means linear movement of the arm with respect to the rotatable bearing in the longitudinal direction of the robot arm.

The packaging device may have a control unit for calculating the trajectory of the foil roll attached to the robot arm and adjusting the operational parameters of the same based on the height and radius of the cylindrical meat product. The packaging device may have a sensor measuring the angle of rotation of the meat product so that the control unit could calculate a new rotation angle for a subsequent wrapping step.

The device may have a planar bottom plate underneath which the flexible coating material is matted on, so that the planar bottom plate becomes part of the cylindrical meat product after packaging.

The packaging device may have a bottom plate placed on top of the rotator. The bottom plate may be slightly concave such that a small gap is formed in between the side edge of the bottom plate and the rotator for facilitating entrainment of the locking blades.

Preferably, the tips of the pair of locking blades are blunt so that the flexible coating material is not damaged during a plurality of wrapping steps.

The packaging device may have a breaking mechanism for preventing rotation of the roll such that the flexible coating material is tightly wrapped around the cylindrical meat product. The breaking mechanism allows free rotation of the roll of a flexible coating material

Primary object of the present invention is to provide a packaging device which eliminates the drawbacks outlined above in the background of the invention.

A further object of the invention is to provide an automated packaging device which swiftly packages a meat product having a cylindrical or frusto-conical shape. Hence, labor time is decreased and waste of packaging material is prevented.

A further object of the invention is to provide a packaging device which provides standardized packaging structure, each of which look alike and have the same quality.

A further object of the invention is to provide a packaging device which is able to wrap a meat product in a liquid tight manner.

Other objects of the present invention will become apparent from accompanied drawings, brief descriptions of which follow in the next section as well as appended claims.

### Brief Descriptions of the Drawings

Fig. 1 is a perspective view of the device for packaging a meat product in cylindrical form,
Fig. 2A shows the perspective view of the packaging device where the food is wrapped with the first length of foil material,
Fig. 2B shows the perspective view of the packaging device where the food is wrapped with the second length of foil material,
Fig. 3A shows the rear view of the packaging device where the locking blades are inactive,
Fig. 3B shows the rear view of the packaging device where a locking blade is active,
Fig. 4 shows the exploded view of the robot arm and the folio cylinder,
Fig. 5A shows the exploded view of the meat product and its rotator,
Fig. 5B shows the bottom plate of a meat product,
Fig. 6A shows the top view of a packaging device where the locking blades are active,
Fig. 6B shows the top view of a packaging device where both locking blades are inactive,
Fig. 6C shows the top view of a packaging device where the locking blades are active and the cylindrical meat product is removed for clarity,
Fig. 7 shows the perspective view of the robot arm in partly unassembled state for revealing the actuator used for effecting transitional movement within the slot
Fig. 8A to 8H show a plurality of 2D frontal views of the packaging device depicting the movement pattern of the robot arm during one complete cycle of folio wrapping step.
Fig. 9 shows the bottom view of the cylindrical meat product after the folio is matted.

### Detailed Description of the Invention

Hereinafter, preferred embodiments of the present invention will be described in detail with reference to the accompanying drawings which are given solely for the purpose of exemplifying embodiments according to the present invention. The table of reference numerals used in the appended drawings is as follows;
- 10: packaging device
- 11: motor
- 12A: locking blade
- 12B: locking blade
- 13: frame
- 14: shaft
- 15: arm holder
- 16: robot arm
- 17: flexible coating material
- 18: roll
- 19: slot
- 20: rotator
- 21: bottom plate
- 22: motor
- 23: rotatable bearing
- 24: actuator
- 25: breaking mechanism

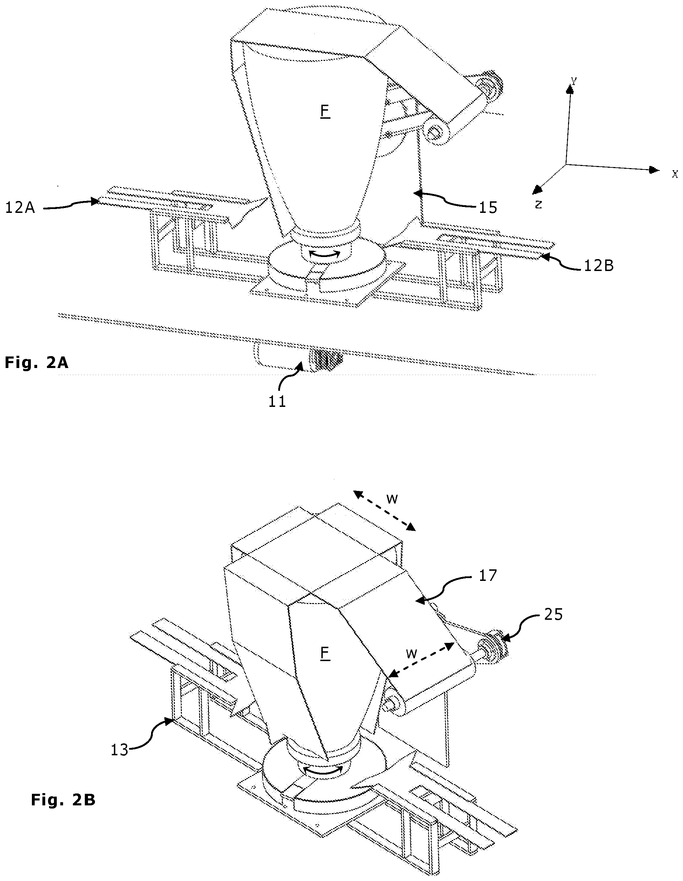

The present invention provides a packaging device (10) for packaging a meat product (F) having a cylindrical or frusto-conical shape. As illustrated in Fig. 2A, the packaging device has a frame (13) extending generally in the horizontal plane (xz) and an arm holder (15) extending perpendicularly to said frame in the vertical plane (xy). The device (10) comprises a rotator (20) for accommodating the meat product (F) in an upright manner and rotating the same around its primary axis (y). The packaging device further comprises a robot arm (16) which is rotatably attached to the arm holder (15) and which, in use, carries a roll (18) flexible coating material (17) for wrapping on the surface of the meat product (F) having a cylindrical or frusto-conical shape. The packaging device (10) has a pair of locking blades (12A, 12B) which are adapted to move in the horizontal plane (xz). The pair of locking blades (12A, 12B) compresses the flexible coating material at the bottom end of the meat product (F) such that the flexible coating material (17) is matted on the bottom surface the meat product when said meat product is rotated around its primary axis (y).

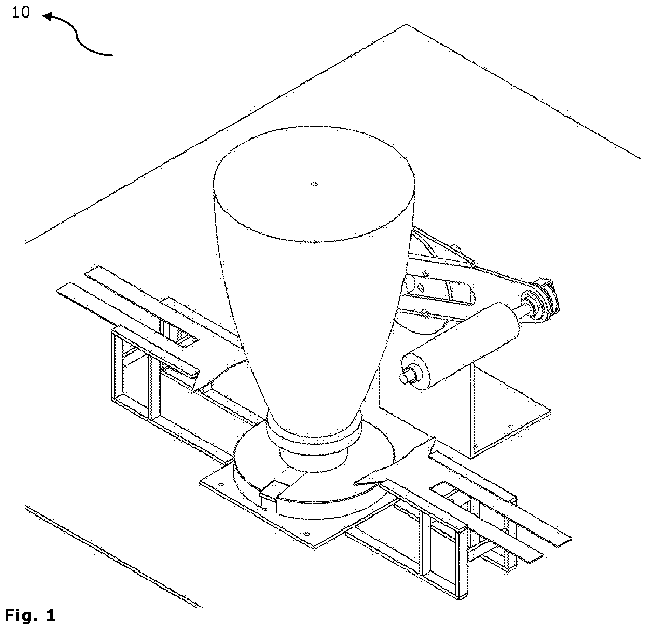

In Fig. 1, the pair of locking blades (12A, 12B) are depicted in open form where there is no compression applied on the flexible coating material (17). Fig. 2A shows the perspective view of the packaging device where the food product is illustrated during the process of wrapping with a first layer of flexible coating material (17). The packaging device is illustrated during a state of wrapping with a second layer of flexible coating material in Fig. 2B. It is clear that the second layer of flexible coating material is wrapped perpendicular to the first layer of flexible coating material. This is achieved by simply rotating the meat product (F) by 90 degrees around its primary axis. The primary axis of the meat product is the vertical axis (y) as depicted in Fig. 2A. An electric motor (11) is used for rotation of the meat cylinder (F) around its primary axis.

The flexible coating material (17) is conveniently a folio strip made of a polymeric material such as polypropylene or polyethylene. As shown in Fig. 2B, the flexible coating material (17) has a width (w) covering the outer surface of the meat product (F). The meat product (F) may have a cylindrical or frusto-conical shape. Preferably, the width (w) of the flexible coating material (17) is more than the maximum radius of the meat product (F). In this way, the meat product (F) may fully be wrapped with the flexible coating material (17) after a plurality of wrapping steps. The meat product shall be rotated a certain amount around its primary axis (y) after each of the plurality of the wrapping steps. Conveniently, the entire meat product (F) may be fully wrapped and sealed in 8 to 12 wrapping steps where each wrapping step may have phase difference of 30 to 45 degrees when looked from the top. The more the width (w) of the flexible coating material (17), the less wrapping steps would be required for fully sealing the meat product (F).

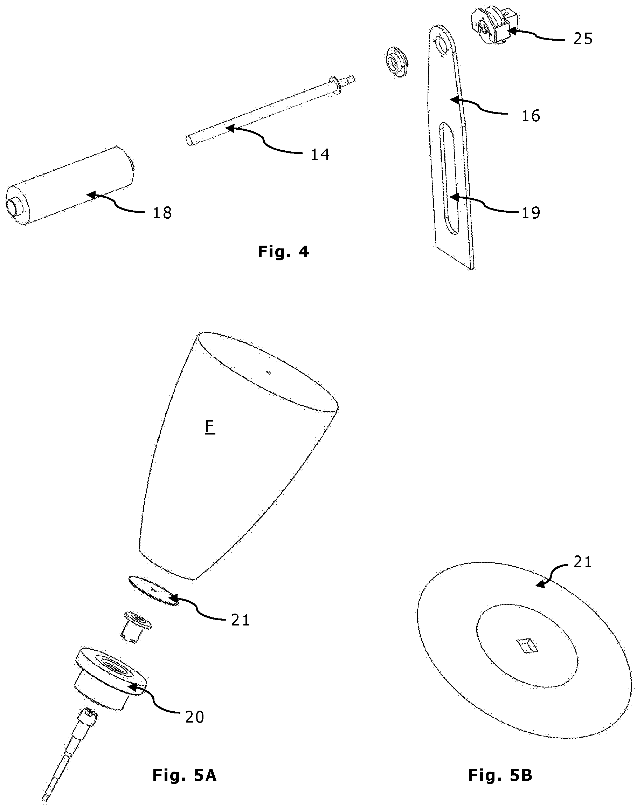

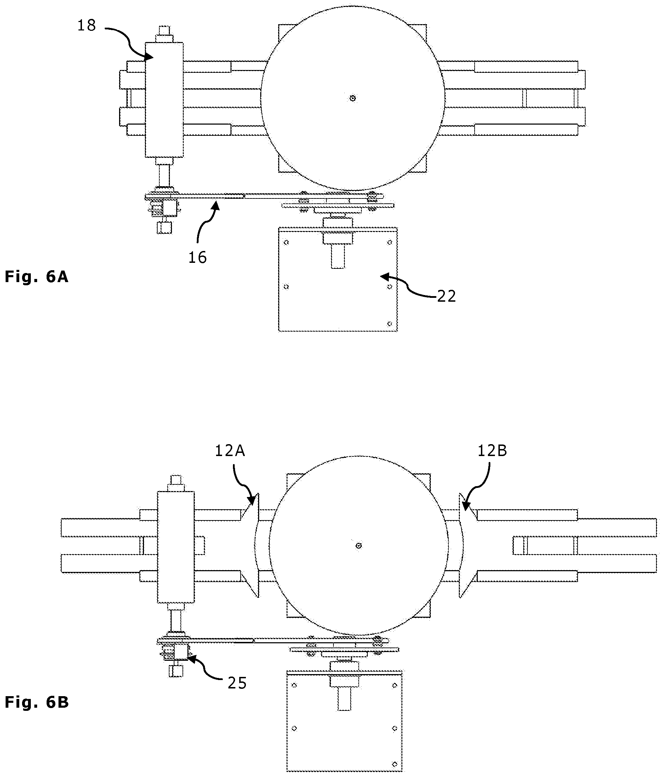

The packaging device (10) has a robot arm (16) which is attached to the arm holder (15) via a rotatable bearing (23) such that the robot arm is able to rotate around an axis (z) which is perpendicular to the vertical plane (xy) as shown in Fig. 2A. An exploded view of the robot arm (16) and the roll (18) of the flexible coating material (17) is depicted in Fig. 4. Rotation of the robot arm (16) around the axis (z) may be realized by a motor (22) as shown in Fig. 6A and 6B and suitable coupling means (not shown). The roll (18) is attached to the distal end of the robot arm (16) in a freely rotatable manner via a shaft (14).

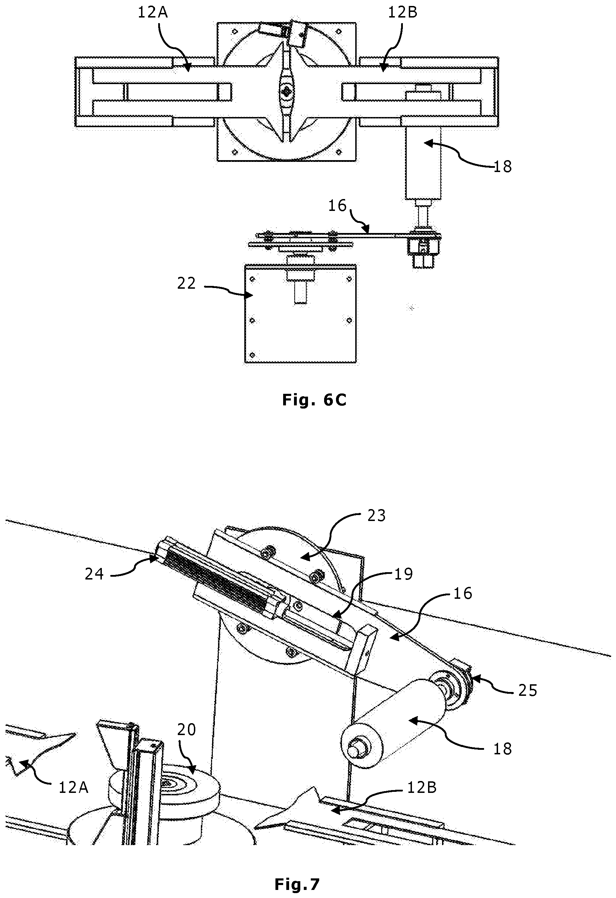

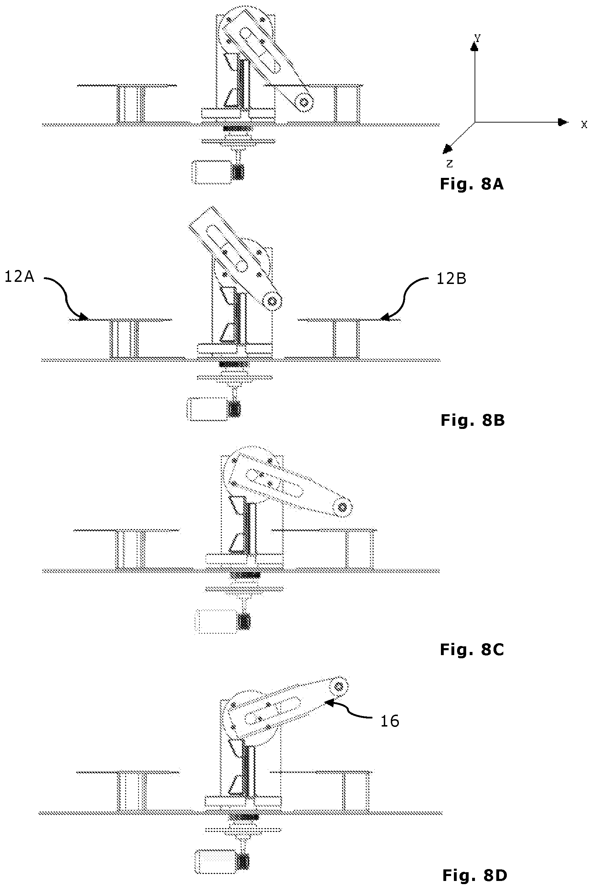

According to the present invention, the robot arm (16) has a slot (19) within which a rotatable bearing can slide by the actuation of an actuator (24) so that the robot arm (16) is able to conduct transitional movement simultaneously during rotation around the meat product (F). As illustrated in Fig. 7, an actuator (24) is used for changing the position of the robot arm from a retracted first position to an extracted second position with respect to the longitudinal direction of the robot arm (16). The robot arm is illustrated in the extracted second position in Fig. 8A whereas it is illustrated in the retracted first position in Fig. 8B. The robot arm (16) is able to move linearly in between the retracted first position and the extracted second position as the rotatable bearing (23) slides within the slot (19) of the robot arm (16). The linear movement of the robot arm (16) may take place during rotation or when there is no rotation of the robot arm (16).

Switching between the retracted first position to the extracted second position (or vice versa) is required in two cases. In the first case, the roll (18) should be carried, via rotation of the robot arm (16), from one side of the meat product (F) to the other side, e.g. from left to right side of the meat product. The roll (18) which is attached to the distal end of the robot arm (16) follows a trajectory passing from above the meat product (F). Hence, the robot arm (16) is able to both rotate and make transitional movement to compensate for the height of the cylindrical meat product (F). The robot arm (16) is able to move linearly with respect to the rotatable bearing (23) to which the robot arm is attached. Hence, the robot arm is able to make a combination of both rotary and linear movements. In the second case, the roll (18) should be kept proximate to the bottom plate (21) at the start of each wrapping step. The bottom plate (21) is located on top of the rotator (20) and the folio strip is matted on the bottom side of the bottom plate (21). After each matting step the roll should be kept proximate to the bottom plate (21) since each of the locking blades (12A, 12B) compresses the flexible coating material (17) onto the bottom side of the bottom plate (21) before starting a new wrapping step.

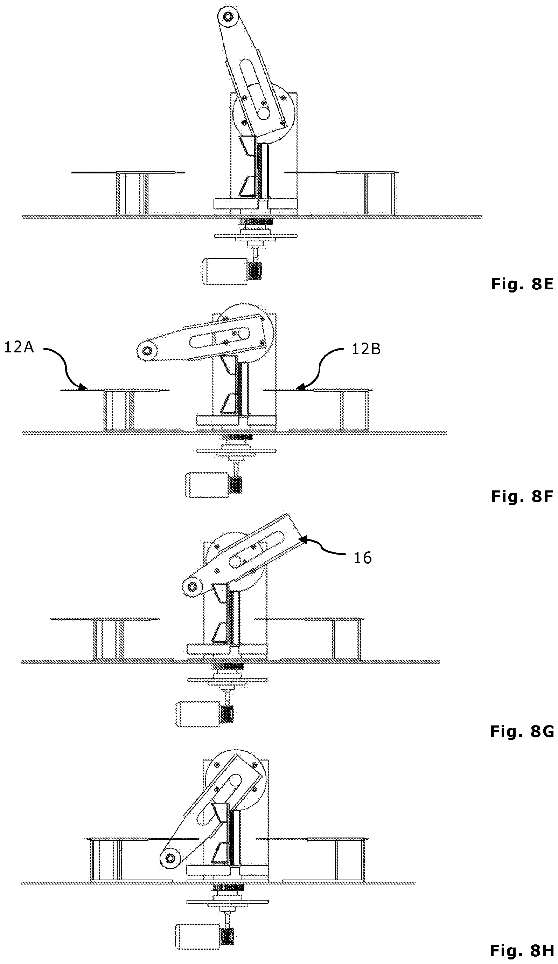

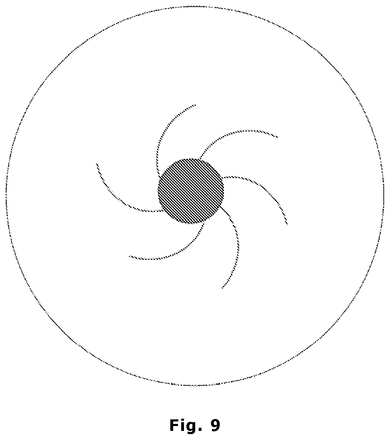

Fig. 8A to 8H show a plurality of 2D frontal views of the packaging device depicting the movement pattern of the robot arm during one complete cycle of folio wrapping step. In Fig. 8A, the robot arm (16) is in its extracted second position. In Fig. 8B, the robot arm (16) moves to its retracted first position. In Fig. 8C, the locking blade (12B) compresses and locks the width of the flexible coating material (17) and the robot arm (16) moves to its extracted second position. In Fig. 8D, the robot arm (16) rotates for carrying the roll (18) from right side of the meat product (F) towards its left side. In Fig. 8E, the robot arm (16) is still in its extracted second position and the roll (18) has just passed from above the cylindrical meat product (not shown for clarity). In Fig. 8F, the robot arm (16) rotates towards the left side of the cylindrical meat product (F) and the locking blade (12B) is still keeping the strip packaging material in locked state. In Fig. 8G, the robot arm (16) moves back to its retracted first position. In Fig. 8H, the robot arm (16) moves to its extracted second position and the locking blade (12A) compresses and locks the width of the flexible coating material (17). Once the flexible coating material (17) is locked underneath the bottom plate (21), the motor (11) rotates the cylindrical meat product (F) around its primary axis so that the flexible coating material (17) is matted on the bottom plate (21). The bottom view of the cylindrical meat product (F) is depicted in Fig. 9 where the arcs demonstrate the matted flexible coating material. A new wrapping step would start from left side of the meat product towards the right side of the product and all processes illustrated in Fig. 8A to 8H would likewise be realized symmetrically.

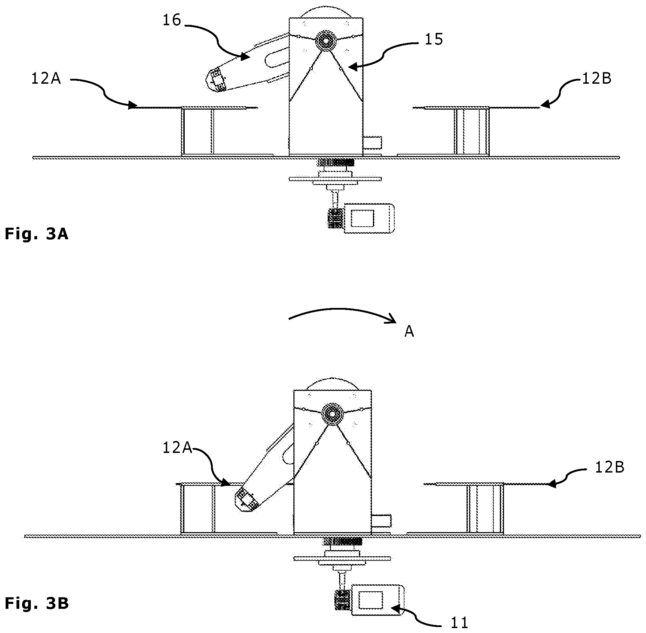

Fig. 3A shows the rear view of the packaging device (10) where both of the locking blades (12A, 12B) are inactive, i.e. there is no compression on the flexible coating material (17) and the roll (18) may simple be unwrapped by the movement of the robot arm (16). Fig. 3B shows the rear view of the packaging device where only one locking blade (12A) is active. This means that a new wrapping cycle may be started by moving the robot arm (16) from left side of the meat product towards right side of the same, i.e. in the direction of arrow (A) as depicted in Fig. 3B. The top view of packaging machine where both locking blades (12A, 12B) are inactive is illustrated in Fig. 6B. On the other hand, Fig. 6A shows the top view of a packaging device where both of the locking blades (12A, 12B) are active. In the active state of the locking blades (12A, 12B), the locking blades apply compression to the flexible coating material (17) and lock the same. This means that the roll (18) can no longer be rotated with the movement of the robot arm (16). This state has been depicted in Fig. 6C in which the cylindrical meat product (F) is removed for a clear view.

As shown in Fig. 7, the roll (18) of the flexible packaging material (17) is attached to the distal end of the robot arm in the longitudinal direction of the robot arm (16). The roll (18) is attached via a shaft (14), a breaking mechanism (25) and coupling means as illustrated in Fig. 4. The breaking mechanism (25) is used to allow free rotation of the roll (18) when the robot arm is in its extracted second position as shown in Fig. 8A and Fig. 8H. In both cases, free rotation of the roll is required for allowing the locking blades (12A, 12B) swiftly attach the flexible coating material (17) to the underside of the bottom plate (21). In all other cases, the breaking mechanism (25) breaks the roll (18) so that the roll (18) cannot rotate and hence the flexible coating material (17) uncoils from the roll (18) and is tightly wrapped around the meat product (F). The roll (18) is usually formed by coiling a flexible coating material (17) and applying a small amount of adhesive between layers so that the flexible coating material (17) uncoils under a slight tension. Once the breaking mechanism prevents free rotation of the roll (18), the tensioned flexible coating material (17) may be tightly wrapped around the meat product (F).

Fig. 5A shows the exploded view of the meat product (F) and its rotator (20). A bottom plate (21) is located on top of the rotator (20) before the meat product (F) is placed in the packaging machine (10). The bottom plate (21) has an opening in its center for accommodating the bottom end of the skewer to which the meat slices are attached. The bottom plate (21) is substantially planar whereas it is slightly concave for facilitating the movement of the locking blades (12A, 12B). The elevation of each of the locking blades (12A, 12B) in the vertical axis (y) are set such that both blades move and contact immediately underneath the bottom plate (21) and the flexible coating material (17) is compressed and locked immediately underneath said bottom plate. There exists a small gap in the vertical axis (y) in between the rotator (20) and the side edges of the bottom plate (21). This gap provides for entrainment of each of the locking blades (12A, 12B).

Once the flexible coating material (17) is compressed and locked by any of the locking blades (12A, 12B), the cylindrical meat product (F) is rotated around its primary axis and the flexible coating material (17) is matted underneath the bottom plate (21). The matted flexible coating material (17) is depicted in Fig. 9. After packaging is complete, the bottom plate (21) will become integral with the meat product (F). Hence, the cylindrical meat product (F) will have a substantially planar or flat bottom end. As all of the flexible coating material (17) is already wrapped and matted underneath the bottom plate, there exists no risk that the flexible coating material (17) may slip into the meat slices.

The locking blades (12A, 12B) move in the horizontal axis (x) when switching between their active and inactive positions. The locking blades (12A, 12B) may be driven by any suitable means (not shown) such as electric motors, pneumatic or hydraulic pistons, magnetic drives etc. The elevation of the locking blades (12A, 12B) in the vertical direction is set such that each of the blades (12A, 12B) penetrate into a small gap found in between the rotator (20) and the bottom plate (21) in the vertical axis (y). In this way, it is ensured that the flexible coating material (17) is always entrapped in this small gap and matted on the bottom wall of the bottom plate (21). The edges of the locking blades (12A, 12B) shall not be sharp in order to avoid the risk of tearing, cutting or otherwise damaging the flexible coating material (17). The edges of the locking blades (12A, 12B) shall preferably be blunt for ensuring that the folio material is not damaged and that the plurality of wrapping steps may be conducted without any interruptions.

The packaging device (10) according to the present invention has a control unit (not shown) for calculating the trajectory of the roll (18) attached to the distal end of the robot arm (16). The control unit may be used to adjust the operational parameters of the same based on the height and radius of the cylindrical meat product (F). The control unit may typically have a programmable logic control (PLC) which is able to control at least the movement of the robot arm (16), the locking blades (12A, 12B) and the motor (11). The packaging device (10) may further have a sensor measuring the angle of rotation of the meat product so that the control unit could calculate a new rotation angle for a subsequent wrapping step. The sensor may be used to detect the rotation angle of the meat product (F) around its primary axis (y) and this data may be used to optimize the angular position of the cylindrical meat product (F) after each wrapping step.

The flexible coating material (17) is matted underneath the bottom plate (21), which is substantially planar. The planar bottom plate (21) becomes part of the cylindrical meat product (F) after wrapping of the plurality of the strips of the flexible coating material (17). In this way, the cylindrical meat product (F) has a perfectly planar bottom end which is strongly needed in the industry. Furthermore, the meat product is ideally sealed against fluid leakages and ready for either sale or for freezing.

## Claims

1. A packaging device (10) for packaging a meat product (F) having a cylindrical or frusto-conical shape, the packaging device having a frame (13) extending generally in the horizontal plane (xz) and an arm holder (15) extending perpendicularly to said frame in the vertical plane (xy), said packaging device comprising;
a rotator (20) for accommodating the meat product (F) in an upright manner and rotating the same around its primary axis (y),
a robot arm (16) which is rotatably attached to the arm holder (15) and which, in use, carries a roll (18) of flexible coating material (17) for wrapping on the surface of said meat product (F),
**characterized in that** said packaging device further comprises
a pair of locking blades (12A, 12B) which are adapted to move in the horizontal plane (xz) wherein said pair of locking blades compress the flexible coating material at the bottom end of the meat product such that the flexible coating material (17) is matted on the bottom surface of the meat product when said meat product is rotated around its primary axis (y).

2. A packaging device (10) as disclosed in claim 1 wherein the robot arm (16) is attached to the arm holder (15) via a rotatable bearing (23) such that the robot arm is adapted to rotate around an axis (z) which is perpendicular to the vertical plane (xy).

3. A packaging device (10) as disclosed in claim 2 wherein the robot arm (16) has a slot (19) within which a rotatable bearing can slide by the actuation of an actuator (24) so that the robot arm (16) is adapted to conduct transitional movement simultaneously during rotation.

4. A packaging device (10) as disclosed in claim 3 wherein the device has a control unit for calculating the trajectory of the roll (18) attached to said robot arm and adjusting the operational parameters of the same based on the height and radius of the cylindrical meat product (F).

5. A packaging device (10) as disclosed in claim 1 wherein the device has a planar bottom plate (21) underneath which the flexible coating material (17) is matted, so that the planar bottom plate (21) becomes part of the cylindrical meat product (F) after packaging.

6. A packaging device (10) as disclosed in claim 1 wherein the device has a motor (11) which is adapted to rotate the cylindrical meat product (F) around its primary axis (y).

7. A packaging device (10) as disclosed in claim 4 wherein the device has a sensor measuring the angle of rotation of the meat product so that the control unit could calculate a new rotation angle for a subsequent wrapping step.

8. A packaging device (10) as disclosed in claim 1 wherein the device has a breaking mechanism (25) which is adapted to prevent free rotation of the roll (18) such that the flexible coating material (17) is tightly wrapped around the meat product (F).

9. A packaging device (10) as disclosed in claim 1 wherein the device has a bottom plate (21) placed on top of the rotator (20).

10. A packaging device (10) as disclosed in claim 9 wherein the bottom plate (21) is slightly concave such that a small gap is formed in the longitudinal direction of the meat product (F), the gap being formed in between the side edge of the bottom plate (21) and the rotator (20) for facilitating entrainment of the locking blades (12A, 12B).

11. A packaging device (10) as disclosed in claim 1 wherein the flexible coating material (17) is a folio strip.

12. A packaging device (10) as disclosed in claim 1 wherein the tips of the pair of locking blades (12A, 12B) are blunt so that the flexible coating material (17) is not damaged during a plurality of wrapping steps.

13. Use of the packaging device of any of the preceding claims for packaging a meat product (F) having a cylindrical or frusto-conical shape.

## Patentansprüche

1. Verpackungsvorrichtung (10) zum Verpacken eines Fleischprodukts (F) mit einer zylindrischen oder kegelstumpfförmigen Form, wobei die Verpackungsvorrichtung einen Rahmen (13), der sich im Wesentlichen in der horizontalen Ebene (xz) erstreckt, und einen Armhalter (15) aufweist, der sich senkrecht zu dem Rahmen in der vertikalen Ebene (xy) erstreckt, wobei die Verpackungsvorrichtung Folgendes umfasst:
einen Rotator (20) zum Aufnehmen des Fleischprodukts (F) in aufrechter Weise und zum Drehen desselben um seine Hauptachse (y) und
einen Roboterarm (16), der drehbar an dem Armhalter (15) angebracht ist und der im Betrieb eine Rolle (18) aus flexiblem Beschichtungsmaterial (17) zum Umwickeln der Oberfläche des Fleischprodukts (F) trägt,
**dadurch gekennzeichnet, dass** die Verpackungsvorrichtung ferner
ein Paar von Arretierklingen (12A, 12B) umfasst, die geeignet sind, sich in der horizontalen Ebene (xz) zu bewegen, wobei das Paar von Arretierklingen das flexible Beschichtungsmaterial an dem unteren Ende des Fleischprodukts so zusammendrückt, dass das flexible Beschichtungsmaterial (17) auf der unteren Oberfläche des Fleischprodukts mattiert wird, wenn das Fleischprodukt um seine Hauptachse (y) gedreht wird.

2. Verpackungsvorrichtung (10) nach Anspruch 1, wobei der Roboterarm (16) über ein drehbares Lager (23) so an dem Armhalter (15) befestigt ist, dass der Roboterarm um eine Achse (z) rotierbar ist, die senkrecht zu der vertikalen Ebene (xy) steht.

3. Verpackungsvorrichtung (10) nach Anspruch 2, wobei der Roboterarm (16) einen Schlitz (19) aufweist, in dem ein drehbares Lager durch die Betätigung eines Aktuators (24) gleiten kann, so dass der Roboterarm (16) eingerichtet ist, während der Drehung gleichzeitig eine Übergangsbewegung auszuführen.

4. Verpackungsvorrichtung (10) nach Anspruch 3, wobei die Vorrichtung eine Steuereinheit zur Berechnung der Trajektorie der an dem Roboterarm angebrachten Rolle (18) und zur Einstellung der Betriebsparameter derselben auf der Grundlage der Höhe und des Radius des zylindrischen Fleischprodukts (F) aufweist.

5. Verpackungsvorrichtung (10) nach Anspruch 1, wobei die Vorrichtung eine ebene Bodenplatte (21) aufweist, unter der das flexible Beschichtungsmaterial (17) mattiert ist, so dass die ebene Bodenplatte (21) nach dem Verpacken Teil des zylindrischen Fleischprodukts (F) wird.

6. Verpackungsvorrichtung (10) nach Anspruch 1, wobei die Vorrichtung einen Motor (11) aufweist, der dazu eingerichtet ist, das zylindrische Fleischprodukt (F) um seine Hauptachse (y) zu drehen.

7. Verpackungsvorrichtung (10) nach Anspruch 4, wobei die Vorrichtung einen Sensor aufweist, der den Drehwinkel des Fleischprodukts misst, so dass die Steuereinheit einen neuen Drehwinkel für einen nachfolgenden Einwickelschritt berechnen kann.

8. Verpackungsvorrichtung (10) nach Anspruch 1, wobei die Vorrichtung einen Abbruchmechanismus (25) aufweist, der geeignet ist, eine freie Drehung der Rolle (18) zu verhindern, so dass das flexible Beschichtungsmaterial (17) fest um das Fleischprodukt (F) gewickelt wird.

9. Verpackungsvorrichtung (10) nach Anspruch 1, wobei die Vorrichtung eine Bodenplatte (21) aufweist, die auf der Oberseite des Rotators (20) angeordnet ist.

10. Verpackungsvorrichtung (10) nach Anspruch 9, wobei die Bodenplatte (21) leicht konkav ist, so dass ein kleiner Spalt in der Längsrichtung des Fleischprodukts (F) ausgebildet ist, wobei der Spalt zwischen der Seitenkante der Bodenplatte (21) und dem Rotator (20) ausgebildet ist, um das Mitreißen der Arretierklingen (12A, 12B) zu erleichtern.

11. Verpackungsvorrichtung (10) nach Anspruch 1, wobei das flexible Beschichtungsmaterial (17) ein Folienstreifen ist.

12. Verpackungsvorrichtung (10) nach Anspruch 1, wobei die Spitzen des Paares von Arretierklingen (12A, 12B) stumpf sind, so dass das flexible Beschichtungsmaterial (17) während einer Vielzahl von Umwicklungsschritten nicht beschädigt wird.

13. Verwendung der Verpackungsvorrichtung nach einem der vorhergehenden Ansprüche zum Verpacken eines Fleischprodukts (F) mit einer zylindrischen oder kegelstumpfförmigen Form.

## Revendications

1. Dispositif d'emballage (10) pour emballer un produit de viande (F) de forme cylindrique ou tronconique, le dispositif d'emballage ayant un bâti (13) s'étendant généralement dans le plan horizontal (xz) et un support de bras (15) s'étendant perpendiculairement audit bâti dans le plan vertical (xy), ledit dispositif d'emballage comprenant :
un dispositif de rotation (20) pour recevoir le produit de viande (F) d'une manière verticale et le faire tourner autour de son axe principal (y),
un bras robotique (16) qui est fixé de manière rotative au support de bras (15) et qui, en utilisation, porte un rouleau (18) de matériau de revêtement souple (17) destiné à envelopper la surface dudit produit de viande (F),
**caractérisé par le fait que** ledit dispositif d'emballage comprend en outre :
une paire de lames de verrouillage (12A, 12B) qui sont aptes à se déplacer dans le plan horizontal (xz), ladite paire de lames de verrouillage comprimant le matériau de revêtement souple à l'extrémité inférieure du produit de viande de telle sorte que le matériau de revêtement souple (17) est matelassé sur la surface inférieure du produit de viande lorsque ledit produit de viande est amené à tourner autour de son axe principal (y).

2. Dispositif d'emballage (10) selon la revendication 1, dans lequel le bras robotique (16) est fixé au support de bras (15) par l'intermédiaire d'un palier rotatif (23) de telle sorte que le bras robotique est apte à tourner autour d'un axe (z) qui est perpendiculaire au plan vertical (xy).

3. Dispositif d'emballage (10) selon la revendication 2, dans lequel le bras robotique (16) a une fente (19) à l'intérieur de laquelle un palier rotatif peut coulisser par l'actionnement d'un actionneur (24) de telle sorte que le bras robotique (16) est apte à effectuer un mouvement de transition simultanément à une rotation.

4. Dispositif d'emballage (10) selon la revendication 3, le dispositif ayant une unité de commande pour calculer la trajectoire du rouleau (18) fixé audit bras robotique et ajuster les paramètres de fonctionnement de celui-ci sur la base de la hauteur et du rayon du produit de viande cylindrique (F).

5. Dispositif d'emballage (10) selon la revendication 1, le dispositif ayant une plaque inférieure plane (21) sous laquelle le matériau de revêtement souple (17) est matelassé, de telle sorte que la plaque inférieure plane (21) devient une partie du produit de viande cylindrique (F) après emballage.

6. Dispositif d'emballage (10) selon la revendication 1, le dispositif ayant un moteur (11) qui est apte à faire tourner le produit de viande cylindrique (F) autour de son axe principal (y).

7. Dispositif d'emballage (10) selon la revendication 4, le dispositif ayant un capteur mesurant l'angle de rotation du produit de viande de telle sorte que l'unité de commande peut calculer un nouvel angle de rotation pour une étape d'enveloppement ultérieure.

8. Dispositif d'emballage (10) selon la revendication 1, le dispositif ayant un mécanisme de rupture (25) qui est apte à empêcher une rotation libre du rouleau (18) de telle sorte que le matériau de revêtement souple (17) est étroitement enroulé autour du produit de viande (F).

9. Dispositif d'emballage (10) selon la revendication 1, le dispositif ayant une plaque inférieure (21) placée sur le dessus du dispositif de rotation (20).

10. Dispositif d'emballage (10) selon la revendication 9, dans lequel la plaque inférieure (21) est légèrement concave de telle sorte qu'un petit intervalle est formé dans la direction longitudinale du produit de viande (F), l'intervalle étant formé entre le bord latéral de la plaque inférieure (21) et le dispositif de rotation (20) pour faciliter un entraînement des lames de verrouillage (12A, 12B).

11. Dispositif d'emballage (10) selon la revendication 1, dans lequel le matériau de revêtement souple (17) est une bande folio.

12. Dispositif d'emballage (10) selon la revendication 1, dans lequel les pointes de la paire de lames de verrouillage (12A, 12B) sont émoussées de telle sorte que le matériau de revêtement souple (17) n'est pas endommagé pendant une pluralité d'étapes d'enveloppement.

13. Utilisation du dispositif d'emballage selon l'une quelconque des revendications précédentes pour emballer un produit de viande (F) de forme cylindrique ou tronconique.
